# EUROPEAN PATENT APPLICATION

(11) **EP 3 732 990 A1**
(43) Date of publication of application: **04.11.2020**
(21) Application number: 20172821.9
(22) Date of filing: 04.05.2020
(51) Int. Cl.: A23K 10/00

(54) **PECKSTONE FOR POULTRY**

(30) Priority: 02.05.2019 EP 19172182; 01.07.2019 EP 19183552
(71) Applicant: Ca Minerals B.V., 5445 AS Landhorst (NL)
(72) Inventor: de Bruin, Eric Christian, 5445 AS Landhorst (NL)
(74) Representative: van Essen, Peter Augustinus

(57) **Abstract**

The invention provides peck stone for birds, in particular for poultry, comprising:
- 4-10 % w/w monocalcium phosphate;
- 1-5 % w/w of a flavouring compound resulting in a sweet taste sensation for birds, in particular for poultry, in particular molasses;
- 1-10 % w/w NaCl;
- more than 75 % w/w of pellets resulting from drinking water softening, the used pellets having a core of grafting particles selected from fine-grain sand, calcite and a combination thereof and having a particles size of 0.4-5 mm.

## Description

### Field of the invention

The invention relates to a peckstone for poultry, and a method for producing such a peckstone.

### Background of the invention

In general, elements for uses in animal husbandry that provide a means for pecking, or for animals to sharpen or rasp their teeth, are known in general. For poultry, blocks are proposed that are referred to as a peckstone or a picking block.

US849011 of 1907 describes a picking block: "I take one-half gallon, by measure, of unslaked lime, one pint of salt, and one-half pint of Venetian red and digest the same in sufficient water to make three gallons. To this is added a sufficient quantity of a mixture composed of equal parts of fine gravel, sand, shelled corn, and finely-divided grain to produce a pasty mass thick enough to be molded. This mass when molded into blocks is allowed to air-dry until hard enough for use."

US3293039 describes a pecking stone for birds having the following composition:

| | |
|---|---|
| Crushed divided oyster shell | 2½ ozs. |
| Fine gravel (1/8^{th}" maximum size) | 2½ ozs |
| Finely divided charcoal | 10 grams. |
| Powdered pumice | 1 oz. |
| Glastone | 2 ozs. |
| Honey (liquid) | 1½ ozs. |
| Cod liver oil (liquid) | 6 grams. |
| Table salt (NACL) | 4 grams. |
| Water | 2 ozs. |

EP3090627 for instance according to its abstract describes that it "relates to a feed device for poultry animals, comprising a feed source (10), a feed line (20) formed on the feed source (10), a feed valve device arranged in the feed line (20), which in a closed valve position (30) the passage of feed through the feed line (20) blocks and in an open valve position (30) the passage of feed through the feed line (20) releases. According to the invention, the feeding device has a picking block (50a, 50b) which is movably mounted and mechanically coupled with the feed valve device such that in a rest position of the picking block the feed valve device (30) is closed and in a picking block (50a, 50b) by picking. deflected position of the picking block (50a, 50b), the feed valve device is opened."

WO2015/050955 according to its abstract describes "methods of making a feed pellet for an animal by agglomerating at least two ingredients in a first apparatus to form a plurality of nuclei and tumbling the plurality of nuclei in a second apparatus and simultaneously providing additional amounts of the at least two ingredients to the second apparatus, thereby forming a plurality of feed pellets for an animal."

EP231079, which shares priority with US4996065, according to their abstracts describe "a novel binder combination for pelletized and compressed animal feed. This binder comprises a chemically reactive mixture of a reactive phosphate source plus a reactive metal oxide, hydroxide, or salt."

US4560561 according to its abstract describes that "an improved poultry feed supplement is provided by homogeneously mixing together, preferably utilizing both rotary and lateral oscillatory motions, waste lime from a sugar refining process and not in excess of about 20% of nutritive agglomerating constituent selected from the group consisting of beet molasses, cane molasses, wood molasses, citrus molasses, corn steep liquor, invert sugar solution and mixtures thereof. The moisture content of the mix is adjusted, if necessary, during mixing to about 18 to 23 weight percent, preferably about 21 weight percent, and the resulting mixture preferably is formed into pellets of an average diameter of about 1/16", which pellets are then dried to a hard stable form, with a moisture content of, for example, about 0 to 4 weight percent. The feed supplement is used to improve the strength of poultry egg shells. The supplement is simple, efficient and inexpensive to make and use. The supplement utilizes constituents which have heretofore generally been considered waste byproducts of the sugar refining process, thereby improving the efficiency of the overall process."

### Summary of the invention

A disadvantage of prior art that relatively expensive material is used.

Hence, it is an aspect of the invention to provide an alternative peck stone, which preferably further at least partly obviates one or more of above-described drawbacks.

There is further provided peck stone for birds, in particular for poultry, comprising:
- 4-10 % w/w monocalcium phosphate;
- 1-5 % w/w of a flavouring compound resulting in a sweet taste sensation for birds, in particular for poultry, in particular molasses;
- 1-10 % w/w NaCl;
- more than 75 % w/w of pellets resulting from drinking water softening, the used pellets having a core of grafting particles selected from fine-grain sand, calcite and a combination thereof and having a particles size of 0.4-5 mm.

It was found that the amount of monocalcium phosphate or MCP allows control over properties of the peckstone. In particular, the amount of MCP allows setting of the hardness of the peckstone. It was found that lowering the amount of MCP reduces the hardness, and making the amount higher increases the hardness. It was found that for making the peckstone attractive for birds, an amount of 4-10 % w/w is preferred. In fact, it was found that for poultry, the optimum amount was between 6 and 7 % w/w.

In an embodiment, the peck stone comprises 5-8% w/w monocalcium phosphate, in particular 6-7 % w/w monocalcium phosphate.

In an embodiment, the peck stone further comprises a natural red colorant. In a particular embodiment, it is selected from beet red, annatto, carmine, paprika, lycopene, and mixtures thereof.

In an embodiment, the peck stone comprises less than 90 % w/w of the pellets, in particular less than 85 % w/w of pellets.

In an embodiment, the peck stone further comprises a fragrant appealing to birds, in particular to poultry.

In an embodiment, the pellets have a diameter of 0,5-4 mm.

There is further provided a use of pellets resulting from decalcification of drinking water in a peck stone for poultry, in particular as mentioned above, in which said pellets have a core of calcite grafting particles.

There is further provided a peck stone for birds, in particular for poultry, comprising as ingredient per 100 grams:
- 25-75 gram of pellets resulting from drinking water softening, the used pellets having a core of grafting particles selected from fine-grain sand, calcite and a combination thereof and having a particles size of 0.4-5 mm;
- 22-18 grams of NaCl;
- 36-40 grams of chalk;
- 1-5 grams of molasses.

The proposed peck stone largely comprised relatively cheap and easy to obtain side product of production of drinking water, which is on the other hand suited for its purpose, as it is derived from drinking water. The pellets do not need to be transported over large distances before manufacturing the peck stone.

It was found that this resulted in a relatively high amount of magnesium, which is of benefit for poultry.

In the claims, the amount of the component are based upon 100 grams of final material. These materials together usually add up to 100 grams. It should be clear, however, that the mutual ratios can vary, causing the upper and lower boundaries not to add up to 100 grams. In one recipe, for instance 39 grams of pellets, 38 grams of chalk, 20 grams of NaCl and 3 grams of molasses is describes, adding up to 100 grams of pre-mix. In this recipe, the mutual ration of the ingredients can vary independently from one another. For instance, more weight of pellets and molasses can be used, and less of the other ingredients. In the claim, boundaries of the different components are indicated in a pre-mixture of 100 grams.

The NaCl usually is of a food-grade purity. This is known to a skilled person.

Molasses is for instance cane molasses. For instance, this is available from E D & F Man Molasses B.V., the Netherlands. In fact, other sources for saccharose or fructose can be used. However, molasse has a low price and in particular poultry likes it.

The pellets that result from drinking water softening are laregely composed of potassium carbonate, CaCO3. These pellets are also named "chalkgrains" "marble grains", precipitated potassium carbonate, or calcite (in Dutch: Kalkkorrels, marmerkorrels, geprecipiteerd calciumcarbonaat, calciet, marmerachtige kalksteen), and have EC-nr: 207-439-9, CAS-nr: 471-34-1, REACH-nr: 01-2119486795-18-xxx.

The heart of a pellet water softening installation is a reactor. The reactor of pellet reactor is a reactor filled with a grafting core or grafting grains, often fine sand, and in some case file grains of calcite. At the bottom of the reactor, water and chemicals (caustic soda, chalk milk or sodium carbonate) are injected and thoroughly mixed.

The chemicals increase the water pH causing potassium carbonate to precipitate from the solution and to crystallize on the grafting grains as pellets.

The pellets are fluidized by an upward flow of the water and gradually grow. This increases the weight of the pellets and reducing their surface area and reducing the net area of the fluidized bed. Furthermore, larger pellets fluidize less well than small pellets In most applications, the pellets grow up to about 1 mm. diameter. By removing too large pellets and supplying fresh grafting grains, the composition of the pellet bed is controlled.

In the Netherlands, for example, about 50 percent of the drinking water is softened using pellet reactors. The grafting grains may be replaced by potassium grains, resulting in (almost) pure potassium grains or calcite pellets. Composition of available calcite pellets:

| | |
|---|---|
| CaCO3 : | 85 - 100% |
| sand : | <0,1 - 15% |
| Fe salt : | <0,1 - 0,75% |
| Al salt : | <0,1 - 0,3% |
| Mg salt : | <0,1 - 0,2% |
| Mn salt : | <0,1 - 0,3% |
| Moisture(H2O) : | <1 - 5% |

In an embodiment, the pellets can have a diameter of about 0.1 to 10 mm. In many applications, like the current peck stone, the pellets have a diameter of 0,5-4 mm.

In an embodiment, the chalk is derived from grinded pellets resulting from drinking water softening and having calcite particles as grafting particles. In this way, a pure material can be used that is animal and human food safe.

There is further provided a use of pellets resulting from decalcification of drinking water in a peck stone for poultry, in which said pellets have a core of calcite grafting particles. An advantage of such particular pallets is that it can be used almost completely. Furthermore, the composition may be even better guaranteed and checked.

There is further provided a method for producing a peck stone as described, comprising:
- mixing the ingredients;
- filling a press with said mixture;
- pressing said mixture to a peck stone at a pressure of at least 200 bar.

In an embodiment, a pressure is applied of at least 225 bar. For economic reasons, the pressure will in general be below 400 bar.

The term "substantially" herein, such as in in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of".

The term "functionally" will be understood by, and be clear to, a person skilled in the art. The term "substantially" as well as "functionally" may also include embodiments with "entirely", "completely", "all", etc. Hence, in embodiments the adjective functionally may also be removed. When used, for instance in "functionally parallel", a skilled person will understand that the adjective "functionally" includes the term substantially as explained above. Functionally in particular is to be understood to include a configuration of features that allows these features to function as if the adjective "functionally" was not present. The term "functionally" is intended to cover variations in the feature to which it refers, and which variations are such that in the functional use of the feature, possibly in combination with other features it relates to in the invention, that combination of features is able to operate or function. For instance, if an antenna is functionally coupled or functionally connected to a communication device, received electromagnetic signals that are receives by the antenna can be used by the communication device. The word "functionally" as for instance used in "functionally parallel" is used to cover exactly parallel, but also the embodiments that are covered by the word "substantially" explained above. For instance, "functionally parallel" relates to embodiments that in operation function as if the parts are for instance parallel. This covers embodiments for which it is clear to a skilled person that it operates within its intended field of use as if it were parallel.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage.

The invention further applies to an apparatus or device comprising one or more of the characterising features described in the description. The invention further pertains to a method or process comprising one or more of the characterising features described in the description.

The various aspects discussed in this patent can be combined in order to provide additional advantages. Furthermore, some of the features can form the basis for one or more divisional applications.

### Brief description of the drawings

Embodiments of the invention will now be described, by way of example only, with reference to the accompanying example.

### Description of preferred embodiments

### Example I Peckstone

Weight: 1 peckstone weights about 10 kilogram.

Used pellets from Wierden, the Netherlands, obtained from Vitens B.V., Zwolle, the Netherlands, for drinking water softening are used, which according to lab analysis have:

| | |
|---|---|
| Dry matter 99.9 % by weight | |
| Moisture 2.1 % by weight | |

| Anorganic parameters -metals (mg/kg): | |
|---|---|
| aluminium (AI) | 33 |
| arsenic (As) | < 1.5 |
| cadmium (Cd) | < 0.3 |
| calcium (Ca) | 390000 |
| chromium (Cr) 3 | < 3 |
| iron (Fe) | < 19 |
| Copper (Cu) | <4 |
| Mercury (Hg) FIAS/Fims | < 0.05 |
| lead (Pb) 8 | < 8 |
| magnesium (Mg) | 1800 |
| manganese (Mn) | 280 |
| nickel (Ni) 2 | < 2 |
| zinc (Zn) 8 | < 8 |

these pellets have a size of between 0.5-4 mm. The pellets are mixed in an amount of 38.5% by weight with 38.5 % by weight of ground chalk, 20 % by weight of salt (NaCl) and 3 % by weight of molasses. The mixed material is subsequently placed in a press and pressed into blocks of 10 kilogram using a pressure of 250 bar.

These blocks can be used as a peck stone for chicken.

### Example II Peckstone

Weight: 1 peckstone weights about 10 kilogram.

Used pellets are the same as example I.

These pellets are mixed in a weight ration using 85 % w/w of the pellets, 6 % w/w monocalcium phosphate (MCP), 5 % w/w Molasses, and 4 % w/w NaCl. The mixed material is subsequently placed in a press and pressed into blocks of 10 kilogram using a pressure of 250 bar.

Again, these blocks can be used as a peck stone for chicken.

Pressure testing was done on various samples of peckstones, an original, with 5% w/w of binder (MCP), 10 % w/w of binder, and a prototype.

The tests were done on a pressure bank from "Form+test" of 2003. It has a calibrated working range of 150-3000 kN. The results are in the tables below.

| # | Area (mm²) | Force (kN) | 5% pressure (N/mm²) | Weight (kg) | Area (mm²) | Origineel Force (kN) | Pressure (N/mm²) | Weight (kg) |
|---|---|---|---|---|---|---|---|---|
| 1 | 21000 | 21.6 | 1.03 | | 20020 | 35.0 | 1.75 | |
| 2 | 21280 | 27.6 | 1.30 | | 19200 | 33.3 | 1.73 | |
| 3 | 21000 | 19.8 | 0.94 | 10.08 | 19200 | 36.0 | 1.88 | |
| 4 | 20850 | 26.4 | 1.27 | | 19200 | 33.3 | 1.73 | 9.87 |
| *x* | **21033** | **23.9** | **1.14** | | **19405** | **34.4** | **1.77** | |

| | 10% | | | | Prototype | | | |
|---|---|---|---|---|---|---|---|---|
| # | Area (mm2) | Force (kN) | Pressure (N/mm2) | Weight (kg) | area (mm2) | Force (kN) | Pressure (N/mm2) | Weight (kg) |
| 1 | 20550 | 57.4 | 2.79 | | 21128 | 74.5 | 3.53 | |
| 2 | 19980 | 55.7 | 2.79 | 10.06 | 20276 | 85.9 | 4.24 | |
| 3 | | | | | 20700 | 94.7 | 4.57 | 9.97 |
| 4 | | | | | 20550 | 78.7* | 3.83 | |
| ***x*** | **20.265** | **56,6** | **2,79** | | **20664** | **83.5** | **4,04** | |

| | | | | | | | | |
|---|---|---|---|---|---|---|---|---|
| *Visual crack in surface | | | | | | | | |

It will also be clear that the above description and drawings are included to illustrate some embodiments of the invention, and not to limit the scope of protection. Starting from this disclosure, many more embodiments will be evident to a skilled person. These embodiments are within the scope of protection and the essence of this invention and are obvious combinations of prior art techniques and the disclosure of this patent.

## Claims

1. A peck stone for birds, in particular for poultry, comprising:
- 4-10 % w/w monocalcium phosphate;
- 1-5 % w/w of a flavouring compound resulting in a sweet taste sensation for birds, in particular for poultry, in particular molasses;
- 1-10 % w/w NaCl;
- more than 75 % w/w of pellets resulting from drinking water softening, the used pellets having a core of grafting particles selected from fine-grain sand, calcite and a combination thereof and having a particles size of 0.4-5 mm.

2. The peck stone of claim 1, comprising 5-8% w/w monocalcium phosphate, in particular 6-7 % w/w monocalcium phosphate.

3. The peck stone of claim 1 or 2, further comprising a natural red colorant, in particular selected from beet red, annatto, carmine, paprika, lycopene, and mixtures thereof.

4. The peck stone of any one of the preceding claims, comprising less than 90 % w/w of the pellets, in particular less than 85 % w/w of pellets.

5. The peck stone of any one of the preceding claims, further comprising a fragrant appealing to birds, in particular to poultry.

6. The peck stone of any one of the preceding claims, wherein said pellets have a diameter of 0,5-4 mm.

7. Use of pellets resulting from decalcification of drinking water in a peck stone for poultry, in particular according to any one of the preceding claims, in which said pellets have a core of calcite grafting particles.

8. A method for producing a peck stone according to any one of claims 1-6, comprising:
- mixing the ingredients of any one of the preceding claims;
- filling a press with said mixture;
- pressing said mixture to a peck stone at a pressure of at least 200 bar, more in particular at least 225 bar, more in particular below 400 bar.

9. A peck stone for birds, in particular for poultry, comprising as ingredient per 100 grams:
- 25-75 gram, in particular 35-45 grams, of pellets resulting from drinking water softening, the used pellets having a core of grafting particles selected from fine-grain sand, calcite and a combination thereof and having a particles size of 0.4-5 mm, in particular 0,5-4 mm;
- 22-18 grams of NaCl;
- 36-40 grams of chalk, in particular wherein said chalk is derived from grinded pellets resulting from drinking water softening and having calcite particles as grafting particles;
- 1-5 grams of molasses, in particular 2-4 grams of molasses.

10. The peck stone of any one of the preceding claims, wherein said pellets comprise per 100 grams:
- 85-99 grams CaCO3;
- 15- 0 grams of sand;
- 0-2 grams of salts based on Fe, Al, Mg, Mn;
- 5-1 grams of H2O;

11. Use of pellets resulting from decalcification of drinking water in a peck stone for poultry according to any one of the preceding claims, in which said pellets have a core of calcite grafting particles.

12. A method for producing a peck stone, comprising:
- mixing the ingredients of any one of the preceding claims 1-6 or 9-10;
- filling a press with said mixture;
- pressing said mixture to a peck stone at a pressure of at least 200 bar, more in particular at least 225 bar, more in particular below 400 bar.
